# EUROPÄISCHE PATENTSCHRIFT

(11) **EP 0 929 982 B1**
(45) Veröffentlichungstag und Bekanntmachung des Hinweises auf die Patenterteilung: **12.11.2003**
(21) Anmeldenummer: 97944736.4
(22) Anmeldetag: 24.09.1997
(51) Int. Cl.: H04Q 7/22, H04Q 7/38

(54) **VERFAHREN ZUM VERBINDEN EINES IN EINER SCHNURLOSKOMMUNIKATIONSEINRICHTUNG ANKOMMENDEN RUFS AN EIN DUALMODUSENDGERÄT**
METHOD FOR CONNECTING AN INCOMING CALL IN A WIRELESS TELECOMMUNICATIONS INSTALLATION TO A DUAL MODE TERMINAL
PROCEDE POUR COMMUNIQUER UN APPEL ARRIVANT DANS UNE INSTALLATION DE TELECOMMUNICATION SANS FIL, A UN TERMINAL EN MODE BINAIRE

(30) Priorität: 30.09.1996 DE 19640287
(43) Veröffentlichungstag der Anmeldung: 21.07.1999
(73) Patentinhaber: SIEMENS AKTIENGESELLSCHAFT, 80333 München (DE)
(72) Erfinder: KARAPETKOV, Stefan, D-81369 München (DE); SCOTTO DI CARLO, Vincenzo, D-81739 München (DE); MÜLLER, Wilhelm, D-85457 Wörth (DE)
(86) Internationale Anmeldenummer: DE9702173
(87) Internationale Veröffentlichungsnummer: WO98015137

(56) Entgegenhaltungen:
- WO-A-96/06498
- DE-A- 4 343 335
- FR-A- 2 693 863

## Beschreibung

Die Erfindung betrifft ein Verfahren zum Verbinden eines in einer Schnurloskommunikationseinrichtung ankommenden Rufs an ein Dualmodusendgerät, das sowohl als Schnurlosendgerät dieser Schnurloskommunikationseinrichtung betreibbar ist, als auch als Mobilfunkendgerät eines Mobilfunknetzes.

Solche als Dualmodushandapparat (Dual Mode Handy) oder Dualmodusendgerät bezeichneten Endgeräte werden in letzter Zeit von einigen Herstellern angeboten. Bei einem Dualmodusendgerät handelt es sich um ein Kommunikationsendgerät mit einer Sende-/Empfangseinheit und Codier-/Decodiereinheit für ein Mobilfunknetz und mit einer Sende-/Empfangseinheit und einer Codier-/Decodiereinheit für ein stationäres Schnurloskommunikationssystem. Als Mobilfunknetz ist hier meist ein Netz nach dem globalen Standard für Mobilfunk GMS mit ca. 0,9 GHz Trägerfrequenz oder gemäß einem Standard DCS1800 mit ca. 1,8 GHz Trägerfrequenz vorgesehen. Als Schnurloskommunikationssystem ist ein digitales Schnurloskommunikationssystem gemäß dem ETSI-Standard für digitale erweiterte Schnurloskommunikation DECT (Digital Endhandse Cordless Telecommunication) verwendet. Ein solches Endgerät ist zwischen den beiden Betriebsarten Schnurlosbetrieb oder Mobilfunkbetrieb umschaltbar, wobei u.a. die Wähleinrichtung und die Elektroakustikwandler des Endgeräts in beiden Betriebsarten benutzt werden.

Soll ein in der Schnurloskommunikationseinrichtung ankommender Ruf an ein Dualmodusendgerät verbunden werden, so muß das Schnurlosendgerät innerhalb des Funkbereiches der Schnurloskommunikationseinrichtung im Schnurlosmodus betriebsbereit sein. Will ein Teilnehmer einen für das Dualmodusendgerät in der Schnurloskommunikationseinrichtung ankommenden Ruf an einem anderen Endgerät entgegennehmen oder im Mobilfunkbetrieb entgegennehmen, so kann er bei bestimmten bekannten Kommunikationsnetzen, insbesondere in digitalen diensteintegrierten Kommunikationsnetzen eine Anrufumleitung zu diesem anderen Endgerät oder zu demselben Endgerät über ein anderes Kommunikationsnetz veranlassen. Dies ist jedoch relativ aufwendig, so daß viele Teilnehmer eine solche Anrufumleitung nur gelegentlich einrichten.

Ein solches Verfahren zum Weiterleiten eines eingehenden Anrufs an ein Dualmodusendgerät ist bereits aus dem Dokument FR-A-2 693 863 bekannt, wobei bei Nichterreichbarkeit des Endgerätes im Schnurlossystem das Mobilfunknetz befragt wird, ob der Teilnehmer dort erreichbar ist und gegebenenfalls eine Rufumleitung ins Mobilfunknetz erfolgt. Dabei wird im Schnurlossystem eine Tabelle über die im Mobilfunknetz angemeldeten Teilnehmer gespeichert.

Es besteht auch die Möglichkeit, die Schnurloskommunikationseinrichtung bezüglich eines Teilnehmeranschlusses derart einzurichten, daß bei einem in der Schnurloskommunikationseinrichtung ankommenden Ruf für eine bestimmte Zeitdauer ein Weckruf an das Endgerät, für das der Ruf angekommen ist, signalisiert wird und daß nach Ablauf dieser Zeitspanne eine Anrufumleitung automatisch vorgenommen wird. Dies hat den Nachteil, daß der angerufene Teilnehmer innerhalb dieser bestimmten Zeit einen kommenden Ruf entgegennehmen muß wenn er verhindern will, daß dieser Ruf über das Mobilfunknetz umgeleitet wird. Ein weiterer Nachteil eines solchen Vorgehens ist, daß immer, wenn ein in der Schnurloskommunikationseinrichtung ankommender Ruf nicht innerhalb einer bestimmten Zeit zugestellt werden kann, eine Signalisierung für einen Verbindungsaufbau zwischen zwei unterschiedlichen Kommunikationsnetzen erfolgt, unabhängig davon, ob der Teilnehmer im Mobilfunknetz erreichbar ist oder nicht. Dadurch werden die Kommunikationsnetze unnötig belastet.

Aufgabe der Erfindung ist es, ein Verfahren zum Verbinden eines in einer Schnurloskommunikationseinrichtung ankommenden Rufs an ein Endgerät, das sowohl als Schnurlosendgerät dieser Schnurloskommunikationseinrichtung betreibbar ist, als auch als Mobilfunkendgerät eines Mobilfunknetzes. Hierbei sollen unnötige Verbindungsaufbau-Signalisierungen zwischen der Schnurloskommunikationseinrichtung und dem Mobilfunknetz möglichst vermieden werden.

Diese Aufgabe löst die Erfindung durch ein Verfahren mit den Merkmalen des Anspruches 1. Günstige Ausgestaltungen des erfindungsgemäßen Verfahrens sind Gegenstand von Unteransprüchen.

Erfindungsgemäß wird bei aktueller Erreichbarkeit des Dualmodusendgeräts im Mobilfunknetz eine Meldung hierüber an die Schnurloskommunikationseinrichtung übermittelt und in der Schnurloskommunikationseinrichtung wird eine Information bezüglich der Erreichbarkeit des Endgerätes über das Mobilfunknetz gespeichert. Bei einem für das Endgerät in der Schnurloskommunikationseinrichtung ankommenden Ruf wird innerhalb der Schnurloskommunikationseinrichtung überprüft, ob eine Information bezüglich der Erreichbarkeit des Endgerätes über das Mobilfunknetz vorliegt und falls das Endgerät über das Mobilfunknetz erreibar ist, wird der in der Schnurloskommunikationseinrichtung angekommene Ruf an das Endgerät im Mobilfunknetz weitergeleitet.

Eine Weiterbildung der Erfindung betrifft den Fall, daß die Schnurloskommunikationseinrichtung, in der ein Ruf für ein Kommunikationsendgerät ankommt, bezüglich dieses Endgerätes Heimat-Schnurloskommunikationseinrichtung ist, wobei dieses Endgerät zusätzlich an mindestens einer weiteren Schnurloskommunikationseinrichtung betreibbar ist, also angemeldet ist. In einer vorteilhaften Ausgestaltungsform eines erfindungsgemäßen Verfahrens übermittelt die weitere Schnurloskommunikationseinrichtung dem Mobilfunknetz eine Mitteilung, wenn das Endgerät im Bereich dieser weiteren Schnurloskommunikationseinrichtung erreichbar ist und das Mobilfunknetz übermittelt der Heimat-Schnurloskommunikationseinrichtung eine Meldung über die Erreichbarkeit des Endgerätes. Falls vom Mobilfunknetz eine Information über die Erreichbar des Endgerätes im Bereich der weiteren Schnurloskommunikationseinrichtung an die Heimat-Schnurloskommunikationseinrichtung übermittelt worden ist, wird der Ruf von der Heimat-Schnurloskommunikationseinrichtung zur weiteren Schnurloskommunikationseinrichtung weitergeleitet.

Eine Weiterbildung dieser Ausgestaltungsform eines erfindungsgemäßen Verfahrens sieht vor, daß ein Ruf immer von der Heimat-Schnurloskommunikationseinrichtung in das Mobilfunknetz weitergeleitet wird, falls eine Meldung über die Erreichbarkeit des Endgerätes vom Mobilfunknetz zur Heimat-Schnurloskommunikationseinrichtung übermittelt worden ist und daß der von der Heimat-Schnurloskommunikationseinrichtung in das Mobilfunknetz weitergeleitete Ruf von dem Mobilfunknetz zu der weiteren Schnurloskommunikationseinrichtung weitergeleitet wird, falls im Mobilfunknetz eine Information über die aktuelle Erreichbarkeit des Endgerätes über diese weitere Schnurloskommunikationseinrichtung vorliegt.

Die letztgenannte Variante eines erfindungsgemäßen Verfahrens stellt sicher, daß vom Mobilfunknetz zur Heimat-Schnurloskommunikationseinrichtung immer nur eine Meldung benötigt wird, die angibt, daß innerhalb des Mobilfunknetzes Kenntnis über die Erreichbarkeit des Endgerätes vorliegt. Eine Meldung über den tatsächlichen Erreichbarkeitsort des Endgerätes braucht dann nur von der entsprechenden Schnurloskommunikationseinrichtung zum Mobilfunknetz übermittelt zu werden.

Eine Weiterbildung der Erfindung sieht vor, daß ein für ein Kommunikationsendgerät in der Heimat-Schnurloskommunikationseinrichtung ankommender Ruf bei in dieser Kommunikationseinrichtung manuell eingestellter Anrufleitung zu einem manuell eingestellten Umleitungsziel vermittelt wird.

Eine erfindungsgemäße Schnurloskommunikationseinrichtung enthält eine Steuereinrichtung, um bei Erhalt einer Information bezüglich der Erreichbarkeit des Endgerätes über das Mobilfunknetz für diese Endgerät automatisch eine Anrufumleitung zu dem Endgerät im Mobilfunknetz zu aktivieren und um eine solche Anrufumleitung zu deaktivieren, wenn das Kommunikationsendgerät innerhalb der Schnurloskommunikationseinrichtung als erreichbar erfaßt wird.

Eine andere erfindungsgemäße Schnurloskommunikatipnseinrichtung hat eine Steuereinrichtung, um bei Erhalt einer Information bezüglich der Erreichbarkeit eines Endgerätes über das Mobilfunknetz für dieses Endgerät automatisch eine Anrufumleitung zu dem Endgerät im Mobilfunknetz zu aktivieren und um eine solche Anrufumleitung zu deaktivieren, wenn die Information bezüglich der Erreichbarkeit des Endgerätes über das Mobilfunknetz revidiert wird.

Die erstgenannte Schnurloskommunikationseinrichtung hat den Vorteil, daß innerhalb einer Schnurloskommunikationseinrichtung für ein Endgerät kommende Rufe immer dann, wenn das Endgerät über die Schnurloskommunikationseinrichtung nicht erreichbar ist, jedoch über das Mobilfunknetz erreichbar ist, den kommenden Ruf über das Mobilfunknetz entgegennehmen kann.

Wenn bei Vorliegen einer Meldung über die Erreichbarkeit eines Endgerätes über das Mobilfunknetz automatisch eine Anrufumleitung aktiviert wird und darüber hinaus innerhalb des Mobilfunknetzes ebenfalls automatisch eine Anrufumleitung zu einer weiteren Schnurloskommunikationseinrichtung aktiviert wird, sofern von dieser eine Mitteilung über die Erreichbarkeit des Endgerätes über diese Schnurloskommunikationseinrichtung vorliegt, ist die Erreichbarkeit des Endgerätes in hohem Maße sichergestellt, der erforderliche Signalisierungsaufwand bleibt jedoch sehr gering.

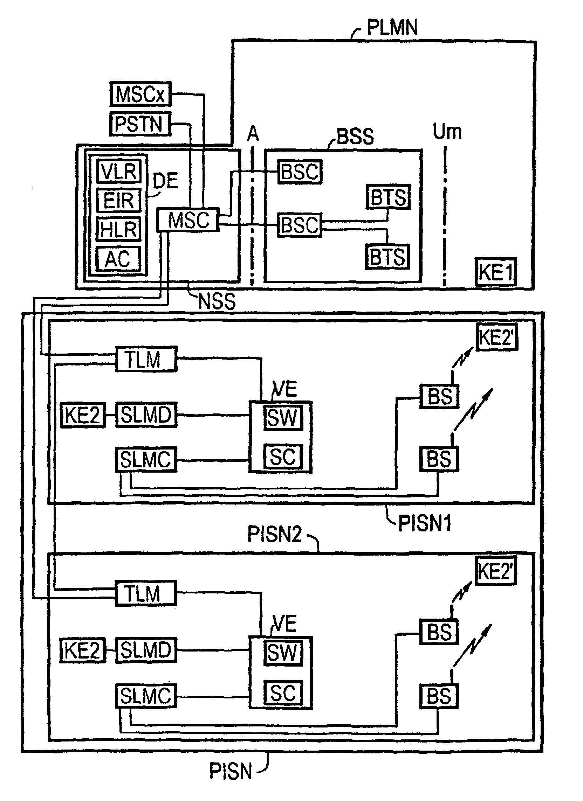

Nachstehend wird die Erfindung unter Bezugnahme auf die Figur anhand eines Ausführungsbeispieles näher erläutert.

Die Figur zeigt in schematischer Darstellung ein Blockschaltbild einer Netzanordnung, bestehend aus einem Mobilfunknetz, einem öffentlichen stationären Netz und einem Privatnetz, bestehend aus zwei Schnurloskommunikationseinrichtungen.

Die Figur zeigt in schematischer Darstellung ein Blockschaltbild eines Mobilfunknetzes PLMN mit einem Netzsubsystem NSS (Network Subsystem) zum Verbindungsaufbau zwischen mindestens einem Mobilteilnehmer mit anderen Teilnehmern und zum Mobilitätsmanagement, und mit einem Basisstationensubssystems zum Steuern der Funkverbindungen mit Mobilstationen. In der Figur ist beispielhaft eine Mobilstation als Kommunikationsendgerät KE1 gezeigt.

Die Haupteinheit des Netzwerksubsystems NSS ist ein Mobildienstevermittlungszentrum MSC (Mobile Services Switching Center), das über eine A-Schnittstelle mit Basisstationssteuereinheiten BSC (Base Station Controller) kommuniziert. In dem einen in der Figur dargestellten Basisstationsstationssubsystem BSS ist eine Basisstationsteuereinheit BSC gezeigt, die mehrere Basisstationen BTS bedarfsweise mit dem Mobildienstevermittlungszentrum MSC verbindet.

Das Mobildienstevermittlungszentrum MSC dient als üblicher Vermittlungsknoten und stellt darüber hinaus alle zum Behandeln von mobilen Teilnehmern benötigten Funktionalitäten wie Registrierung, Autentifikation, Aktualisierung des Aufenthaltsortes, Gesprächsübergabe zwischen Basisstationen und Rufsteuerung zu einem in einem Bereich einer Basisstation als anwesend angemeldeten Teilnehmer bereit. Das Mobildienstevermittlungszentrum MSC stellt auch Verbindungen zu den öffentlichen Netzen PSTN und im Beispiel nach der Figur zu einem anderen Mobildienstevermittlungszentrum MSCx sowie zu zwei Schnurloskommunikationseinrichtungen PISN1, PISN2 eines privaten Netzes bereit. Ein Heimataufenthaltsortsregister HLR und ein Besucheraufenthaltsortsregister VLR dienen gemeinsam mit dem Mobildienstevermittlungszentrum MSC der Rufsteuerung und der Aufenthaltsortermittlung von Teilnehmerendgeräten im Mobilfunknetz.

Zwei weitere Register des Netzsubsystems NSS, nämlich ein Equipment-Identity-Register EIR und ein Authentifizierungsregister AC werden zur Authentifikation und zu Sicherheitszwecken benutzt. Das Equipment Identity Register EIR enthält eine Liste aller in dem-Netz zugelassener Mobilgeräte, wobei jede Mobilstation durch ihre internationale Mobile-Equipment-Identitfikation IMEI (International Mobile Equipment Identity) identifiziert ist. Im Authentifizierungszenter AC sind Kopien aller geheimen, jeweils in der SIM-Karte jedes Teilnehmers gespeicherten Schlüssel abgelegt, die zur Authentifikation und zur Verschlüsselung über den Funkkanal verwendet werden.

Demnach liegt von jedem Teilnehmer innerhalb des Mobilfunknetzes PLM eine ihm zugeordnete Datenbasis vor, in der seine Berechtigungen, sein Aufenthaltsort und weitere Informationen abrufbar gespeichert sind.

Das Mobildienstevermittlungszentrum MSC kommuniziert mit den Registern HLR, VLR, AC und EIR unter Verwendung eines MAP genannten Protokolls (Mobile Application Part Protocol). Dieses genormte Protokoll MAP enthält Signalisierungsfunktionen, die zum Bereitstellen von in einem Mobilnetz benötigten Diensten erforderlich sind.

Die Figur zeigt außerdem zwei Schnurloskommunikationseinrichtungen PISN1, PISN2 eines Privatnetzes, jeweils mit einer Vermittlungseinrichtung VE zum Auf- und Abbau von Verbindungen zwischen Teilnehmern. Die beiden Schnurloskommunikationseinrichtungen PISN1, PISN2 sind hierbei identisch dargestellt und werden nur einmal beschrieben. Die Vermittlungseinrichtung VE enthält einen Vermittlungsknoten SW und eine Vermittlungssteuerung SC. Die Vermittlungseinrichtung VE ist über ein Netzleitungsanschlußmodul PLM mit einem öffentlichen Kommunikationsnetz PSTN und mit dem Mobildienstevermittlungszentrum MSC des Mobilfunknetzes PLMN verbindbar. Die Vermittlungseinrichtung VE kann über Teilnehmeranschlußmodule SLMD und SLMC Verbindungen zu Kommunikationsendgeräten KE2, KE2' aufbauen. Das in der Figur beispielhaft dargestellte Teilnehmeranschlußmodul für digitale Endgerät SLMD ist über eine Leitung mit einem Kommunikationsendgerät KE2 verbindbar. Das in der Figur dargestellte Schnurlos-Teilnehmeranschlußmodul SLMC ist über eine Basisstation BS und eine Funkstrecke mit einem Kommunikationsendgerät KE2' verbindbar.

In der Figur sind Mobilendgeräte KE1 und zweimal KE2' entsprechend ihrer Zugriffsmöglichkeiten in den einzelnen Netzen dargestellt. Die physikalische Realisierung eines für die vorliegende Erfindung relevanten Endgerätes sieht hierbei jedoch vor, daß in einem Gerät sowohl das Endgerät KE1 als auch ein Endgerät KE2' gemäß der Figur enthalten sind.

Bei aktueller Erreichbarkeit dieses Endgerätes KE1/KE2' im Mobilfunknetz wird eine Meldung hierüber an die Schnurloskommunikationseinrichtung PISN1 übermittelt und in der Schnurloskommunikationseinrichtung PISN1 wird eine Information bezüglich der Erreichbarkeit des Endgerätes KE1/KE2' über das Mobilfunknetz PLMN gespeichert.

Bei aktueller Erreichbarkeit dieses Endgerätes KE1/KE2' über die Schnurloskommunikationseinrichtung PISN1 bzw. PISN2 wird eine diesbezügliche Meldung an das Mobilfunknetz PLMN übermittelt und eine Information bezüglich der Schnurloskommunikationseinrichtung PISN1 bzw. PISN2, über die das Endgerät KE1/KE2' erreichbar ist, wird im Mobilfunknetz PLMN gespeichert.

Zum Verbinden eines in der ersten Schnurloskommunikationseinrichtung PISN1 ankommenden Rufs an dieses Endgerät KE1/KE2', das sowohl als Schnurlosendgerät KE2' dieser Schnurloskommunikationseinrichtung PISN1 betreibbar ist, als auch als Mobilfunkendgerät KE1 des Mobilfunknetzes PLMN, wird überprüft, ob eine Information bezüglich der Erreichbarkeit des Endgerätes KE1/KE2' über das Mobilfunknetz PLMN vorliegt.

Falls dies der Fall ist, wird der in der Schnurloskommunikationseinrichtung PISN1 ankommenden Rufs an das Endgerät KE1 im Mobilfunknetz PLMN weitergeleitet, sofern der Ruf nicht in der Schnurloskommunikationseinrichtung PISN1 zugestellt werden kann.

Falls die Schnurloskommunikationseinrichtung PISN1, in der ein Ruf für das Kommunikationsendgerät KE1/KE2' ankommt, bezüglich dieses Endgerätes KE1/KE2' Heimat- Schnurloskommunikationseinrichtung ist und das Endgerät KE1/KE2' zusätzlich an mindestens einer weiteren Schnurloskommunikationseinrichtung PISN2 betreibbar ist, wird der Ruf unter der Bedingung, daß das Mobilfunknetz PLMN der Heimat- Schnurloskommunikationseinrichtung PISN1 eine Meldung bezüglich der Erreichbarkeit des Endgerätes KE1/KE2' über das Mobilfunknetz übermittelt und im Mobilfunknetz eine Information über die aktuelle Erreichbarkeit des Endgerätes KE1/KE2' vorliegt, von der Heimat-Schnurloskommunikationseinrichtung PISN1 zu der weiteren Schnurloskommunikationseinrichtung PISN2 weitergeleitet, sofern im Mobilfunknetz eine Information über die aktuelle Erreichbarkeit des Endgerätes KE1/KE2' über die weitere Schnurloskommunikationseinrichtung PISN2 vorliegt.

Falls eine Information über die aktuelle Erreichbarkeit des Endgerätes im Mobilfunknetz in der Heimat-Schnurloskommunikationseinrichtung PISN1 vorliegt , leitet die Heimat-Schnurloskommunikationseinrichtung PISN1 den kommenden Ruf in das Mobilfunknetz PLMN weiter und der in das Mobilfunknetz PLMN weitergeleitete Ruf wird von dem Mobilfunknetz PLMN zu der weiteren Schnurloskommunikationseinrichtung PISN2 weitergeleitet, falls im Mobilfunknetz eine Information über die aktuelle Erreichbarkeit des Endgerätes KE1/KE2' über die weitere Schnurloskommunikationseinrichtung PISN2 vorliegt.

## Patentansprüche

1. Verfahren zum Verbinden eines in einer ersten Schnurloskommunikationseinrichtung (PISN1) ankommenden Rufs an ein Endgerät (KE1/KE2'), das sowohl als Schnurlosendgerät dieser Schnurloskommunikationseinrichtung (PISN1) betreibbar ist, als auch als Mobilfunkendgerät eines Mobilfunknetzes (PLMN),
a) bei dem bei aktueller Erreichbarkeit des Endgerätes (KE1/KE2') im Mobilfunknetz eine Meldung hierüber an die Schnurloskommunikationseinrichtung (PISN1) übermittelt wird und in der Schnurloskommunikationseinrichtung (PISN1) eine Information bezüglich der Erreichbarkeit des Endgerätes (KE1/KE2') über das Mobilfunknetz (PLMN) gespeichert wird,
b) bei dem bei aktueller Erreichbarkeit des Endgerätes (KE1/KE2') über die Schnurloskommunikationseinrichtung (PISN1) eine diesbezügliche Meldung an das Mobilfunknetz (PLMN) übermittelt wird und eine Information bezüglich der Schnurloskommunikationseinrichtung (PISN1), über die das Endgerät (KE1/KE2') erreichbar ist, im Mobilfunknetz (PLMN) gespeichert wird,
c) bei dem überprüft wird, ob eine Information bezüglich der Erreichbarkeit des Endgerätes (KE1/KE2') über das Mobilfunknetz (PLMN) in der Schnurloskommunikationseinrichtung gespeichert ist,
d) bei dem für den Fall, daß die Überprüfung nach c) zutrifft der in der Schnurloskommunikationseinrichtung (PISN1) ankommende Ruf an das Mobilfunknetz (PLMN) weitergeleitet wird,
e) und bei dem die gespeicherte Information über die Erreichbarkeit der Schnurloskommunikationseinrichtung revidiert wird, falls das Endgerät (KE1/KE2') innerhalb der Schnurloskommunikationseinrichtung als erreichbar erfaßt wird.

2. Verfahren nach Anspruch 1, für den Fall, daß die Schnurloskommunikationseinrichtung (PISN1), in der ein Ruf für das Kommunikationsendgerät (KE1/KE2') ankommt, bezüglich dieses Endgerätes (KE1/KE2') zusätzlich an mindestens einer weiteren Schnurloskommunikationseinrichtung (PISN2) betreibbar ist, und daß das Mobilfunknetz (PLMN) der Heimat-Schnurloskommunikationseinrichtung (PISN1) eine Meldung bezüglich der Erreichbarkeit des Endgerätes (KE1/KE2') über das Mobilfunknetz übermittelt, falls im Mobilfunknetz eine Information über die aktuelle Erreichbarkeit des Endgerätes (KE1/KE2'),
**dadurch gekennzeichnet,**
**daß** der Ruf von der Heimat-Schnurloskommunikationseinrichtung (PISN1) zu der weiteren Schnurloskommunikationseinrichtung (PISN2) weitergeleitet wird, falls im Mobilfunknetz eine Information über die aktuelle Erreichbarkeit des Endgerätes (KE1/KE2') über die weitere Schnurloskommunikationseinrichtung (PISN2) vorliegt.

3. Verfahren nach Anspruch 2,
**dadurch gekennzeichnet,**
**daß** die Heimat-Schnurloskommunikationseinrichtung den kommenden Ruf in das Mobilfunknetz (PLMN) weiterleitet, falls eine Information über die aktuelle Erreichbarkeit des Endgerätes im Mobilfunknetz in der Heimat-Schnurloskommunikationseinrichtung vorliegt, und
**daß** der in das Mobilfunknetz (PLMN) weitergeleitete Ruf von dem Mobilfunknetz (PLMN) zu der weiteren Schnurloskommunikationseinrichtung (PISN2) weitergeleitet wird, falls im Mobilfunknetz eine Information über die aktuelle Erreichbarkeit des Endgerätes (KE1/KE2') über die weitere Schnurloskommunikationseinrichtung (PISN2) vorliegt.

4. Verfahren nach einem der vorhergehenden Ansprüche, **dadurch gekennzeichnet,**
**daß** ein für ein Kommunikationsendgerät kommender Ruf bei manuell eingestellter Anrufumleitung zu einem manuell eingestellten Umleitungsziel vermittelt wird.

5. Schnurloskommunikationseinrichtung zur Durchführung eines Verfahrens zum Verbinden eines in einer ersten Schnurloskommunikationseinrichtung (PISN1) ankommenden Rufs an ein Endgerät (KE1/KE2'), das sowohl als Schnurlosendgerät dieser Schnurloskommunikationseinrichtung (PISN1) betreibbar ist, als auch als Mobilfunkendgerät eines Mobilfunknetzes (PLMN), wobei bei aktueller Erreichbarkeit des Endgerätes (KE1/KE2') im Mobilfunknetz eine Meldung hierüber an die Schnurloskommunikationseinrichtung (PISN1) übermittelt wird und in der Schnurloskommunikationseinrichtung (PISN1) eine Information bezüglich der Erreichbarkeit des Endgerätes (KE1/KE2') über das Mobilfunknetz (PLMN) gespeichert wird, wobei bei aktueller Erreichbarkeit des Endgerätes (KE1/KE2') über die Schnurloskommunikationseinrichtung (PISN1) eine diesbezügliche Meldung an das Mobilfunknetz (PLMN) übermittelt wird und eine Information bezüglich der Schnurloskommunikationseinrichtung (PISN1), über die das Endgerät (KE1/KE2') erreichbar ist, im Mobilfunknetz (PLMN) gespeichert wird, wobei überprüft wird, ob eine Information bezüglich der Erreichbarkeit des Endgerätes (KE1/KE2') über das Mobilfunknetz (PLMN) in der Schnurloskommunikationseinrichtung gespeichert ist, wobei für den Fall, daß diese Überprüfung zutrifft der in der Schnurloskommunikationseinrichtung (PISN1) ankommende Ruf an das Mobilfunknetz (PLMN) weitergeleitet wird und bei dem die gespeicherte Information über die Erreichbarkeit der Schnurloskommunikationseinrichtung revidiert wird, falls das Endgerät (KE1/KE2') innerhalb der Schnurloskommunikationseinrichtung als erreichbar erfaßt wird, die eine Steuereinrichtung aufweist, um bei Erhalt einer Information bezüglich der Erreichbarkeit des Endgerätes (KE1/KE2') über das Mobilfunknetz (PLMN) für dieses Endgerät (KE1/KE2') automatisch eine Anrufumleitung zu dem Endgerät (KE1/KE2') im Mobilfunknetz (PLMN) zu aktivieren und um eine solche Anrufumleitung zu deaktivieren, wenn das Kommunikationsendgerät (KE1/KE2') innerhalb der Schnurloskommunikationseinrichtung (PISN1) als erreichbar erfaßt wird.

6. Schnurloskommunikationseinrichtung zur Durchführung eines Verfahrens zum Verbinden eines in einer ersten Schnurloskommunikationseinrichtung (PISN1) ankommenden Rufs an ein Endgerät (KE1/KE2'), das sowohl als Schnurlosendgerät dieser Schnurloskommunikationseinrichtung (PISN1) betreibbar ist, als auch als Mobilfunkendgerät eines Mobilfunknetzes (PLMN), wobei bei aktueller Erreichbarkeit des Endgerätes (KE1/KE2') im Mobilfunknetz eine Meldung hierüber an die Schnurloskommunikationseinrichtung (PISN1) übermittelt wird und in der Schnurloskommunikationseinrichtung (PISN1) eine Information bezüglich der Erreichbarkeit des Endgerätes (KE1/KE2') über das Mobilfunknetz (PLMN) gespeichert wird, wobei bei aktueller Erreichbarkeit des Endgerätes (KE1/KE2') über die Schnurloskommunikationseinrichtung (PISN1) eine diesbezügliche Meldung an das Mobilfunknetz (PLMN) übermittelt wird und eine Information bezüglich der Schnurloskommunikationseinrichtung (PISN1), über die das Endgerät (KE1/KE2') erreichbar ist, im Mobilfunknetz (PLMN) gespeichert wird, wobei überprüft wird, ob eine Information bezüglich der Erreichbarkeit des Endgerätes (KE1/KE2') über das Mobilfunknetz (PLMN) in der Schnurloskommunikationseinrichtung gespeichert ist, wobei für den Fall, daß diese Überprüfung zutrifft der in der Schnurloskommunikationseinrichtung (PISN1) ankommende Ruf an das Mobilfunknetz (PLMN) weitergeleitet wird und bei dem die gespeicherte Information über die Erreichbarkeit der Schnurloskommunikationseinrichtung revidiert wird, falls das Endgerät (KE1/KE2') innerhalb der Schnurloskommunikationseinrichtung als erreichbar erfaßt wird, die eine Steuereinrichtung aufweist, um bei Erhalt einer Information bezüglich der Erreichbarkeit des Endgerätes (KE1/KE2') über das Mobilfunknetz (PLMN) für dieses Endgerät (KE1/KE2') automatisch eine Anrufumleitung zu dem Endgerät (KE1/KE2') im Mobilfunknetz (PLMN) zu aktivieren und um eine solche Anrufumleitung zu deaktivieren, wenn die Information bezüglich der Erreichbarkeit des Endgerätes (KE1/KE2') über das Mobilfunknetz (PLMN) revidiert wird.

## Claims

1. Method for connection of an incoming call in a first cordless communication device (PISN1) to a terminal (KE1/KE2') which can be operated both as a cordless terminal for this cordless communication device (PISN1) and as a mobile radio terminal in a mobile radio network (PLMN),
a) in which, if the terminal (KE1/KE2') is currently accessible in the mobile radio network, a message about this is transmitted to the cordless communication device (PISN1) and information relating to the accessibility of the terminal (KE1/KE2') via the mobile radio network (PLMN) is stored in the cordless communication device (PISN1),
b) in which, if the terminal (KE1/KE2') is currently accessible via the cordless communication device (PISN1), a message relating to this is transmitted to the mobile radio network (PLMN) and information relating to the cordless communication device (PISN1) via which the terminal (KE1/KE2') can be accessed is stored in the mobile radio network (PLMN),
c) in which a check is carried out to determine whether any information relating to the accessibility of the terminal (KE1/KE2') via the mobile radio network (PLMN) is stored in the cordless communication device,
d) in which, in the situation where the check according to c) is true, the incoming call in the cordless communication device (PISN1) is passed to the mobile radio network (PLMN),
e) and in which the stored information about the accessibility of the cordless communication device is revised if the terminal (KE1/KE2') is detected as being accessible within the cordless communication device.

2. Method according to Claim 1, for the situation where the cordless communication device (PISN1) in which a call arrives for the communication terminal (KE1/KE2') can additionally be operated on at least one further cordless communication device (PISN2) with respect to this terminal (KE1/KE2'), and where the mobile radio network (PLMN) transmits to the home cordless communication device (PISN1) a message relating to the accessibility of the terminal (KE1/KE2') via the mobile radio network if the mobile radio network [lacuna] information about the current accessibility of the terminal (KE1/KE2'),
**characterized**
**in that** the call from the home cordless communication device (PISN1) is passed to the further cordless communication device (PISN2) if there is information in the mobile radio network that the terminal (KE1/KE2') is currently accessible via the further cordless communication device (PISN2).

3. Method according to Claim 2,
**characterized**
**in that** the home cordless communication device passes the incoming call to the mobile radio network (PLMN) if there is information in the home cordless communication device that the terminal is currently accessible in the mobile radio network, and
**in that** the call which is passed to the mobile radio network (PLMN) is passed from the mobile radio network (PLMN) to the further cordless communication device (PISN2) if there is information in the mobile radio network that the terminal (KE1/KE2') is currently accessible via the further cordless communication device (PISN2).

4. Method according to one of the preceding claims,
**characterized**
**in that** an incoming call for a communication terminal is switched to a manually selected diversion destination, in the event of manually selected call diversion.

5. Cordless communication device for carrying out a method for connection of an incoming call in a first cordless communication device (PISN1) to a terminal (KE1/KE2') which can be operated both as a cordless terminal for this cordless communication device (PISN1) and as a mobile radio terminal in a mobile radio network (PLMN), in which case, if the terminal (KE1/KE2') is currently accessible in the mobile radio network, a message about this is transmitted to the cordless communication device (PISN1) and information relating to the accessibility of the terminal (KE1/KE2') via the mobile radio network (PLMN) is stored in the cordless communication device (PISN1), in which case, if the terminal (KE1/KE2') is currently accessible via the cordless communication device (PISN1), a message relating to this is transmitted to the mobile radio network (PLMN) and information relating to the cordless communication device (PISN1) via which the terminal (KE1/KE2') can be accessed is stored in the mobile radio network (PLMN), in which case a check is carried out to determine whether any information relating to the accessibility of the terminal (KE1/KE2') via the mobile radio network (PLMN) is stored in the cordless communication device, in which case, in the situation where this check is true, the incoming call in the cordless communication device (PISN1) is passed to the mobile radio network (PLMN), and in which the stored information about the accessibility of the cordless communication device is revised if it is detected that the terminal (KE1/KE2') is accessible within the cordless communication device, which has a control device in order to automatically activate call diversion to the terminal (KE1/KE2') in the mobile radio network (PLMN) on receiving the information that the terminal (KE1/KE2') is accessible via the mobile radio network (PLMN) for this terminal (KE1/KE2'), and in order to deactivate such call diversion when, the communication terminal (KE1/KE2') is detected as being accessible within the cordless communication device (PISN1).

6. Cordless communication device for carrying out a method for connection of an incoming call in a first cordless communication device (PISN1) to a terminal (KE1/KE2') which can be operated both as a cordless terminal for this cordless communication device (PISN1) and as a mobile radio terminal in a mobile radio network (PLMN), in which case, if the terminal (KE1/KE2') is currently accessible in the mobile radio network, a message about this is transmitted to the cordless communication device (PISN1) and information relating to the accessibility of the terminal (KE1/KE2') via the mobile radio network (PLMN) is stored in the cordless communication device (PISN1), in which case, if the terminal (KE1/KE2') is currently accessible via the cordless communication device (PISN1), a message relating to this is transmitted to the mobile radio network (PLMN) and information relating to the cordless communication device (PISN1) via which the terminal (KE1/KE2') can be accessed is stored in the mobile radio network (PLMN), in which case a check is carried out to determine whether any information relating to the accessibility of the terminal (KE1/KE2') via the mobile radio network (PLMN) is stored in the cordless communication device, in which case, in the situation where this check is true, the incoming call in the cordless communication device (PISN1) is passed to the mobile radio network (PLMN), and in which the stored information about the accessibility of the cordless communication device is revised if it is detected that the terminal (KE1/KE2') is accessible within the cordless communication device, which has a control device in order to automatically activate call diversion to the terminal (KE1/KE2') in the mobile radio network (PLMN) on receiving the information that the terminal (KE1/KE2') is accessible via the mobile radio network (PLMN) for this terminal (KE1/KE2'), and in order to deactivate such call diversion when the information relating to the accessibility of the terminal (KE1/KE2') via the mobile radio network (PLMN) is revised.

## Revendications

1. Procédé pour communiquer un appel arrivant dans une première installation de communication sans fil (PISN1) à un terminal (KE1/KE2') qui peut être exploité aussi bien comme terminal sans fil de cette installation de communication sans fil (PISN1) que comme terminal de radiocommunication mobile d'un réseau de radiocommunication mobile (PLMN),
a) dans lequel, en cas d'accessibilité actuelle du terminal (KE1/KE2') dans le réseau de radiocommunication mobile, un message à ce sujet est transmis à l'installation de communication sans fil (PISN1) et une information relative à l'accessibilité du terminal (KE1/KE2') est mémorisée dans l'installation de communication sans fil (PISN1) par l'intermédiaire du réseau de radiocommunication mobile (PLMN),
b) dans lequel, en cas d'accessibilité actuelle du terminal (KE1/KE2') par l'intermédiaire de l'installation de communication sans fil (PISN1), un message à ce sujet est transmis au réseau de radiocommunication mobile (PLMN) et une information relative à l'installation de communication sans fil (PISN1), au moyen de laquelle le terminal (KE1/KE2') est accessible, est mémorisée dans le réseau de radiocommunication mobile (PLMN),
c) dans lequel il est vérifié si une information relative à l'accessibilité du terminal (KE1/KE2') par l'intermédiaire du réseau de radiocommunication mobile (PLMN) est mémorisée dans l'installation de communication sans fil,
d) dans lequel, au cas où la vérification selon c) est bonne, l'appel arrivant dans l'installation de communication sans fil (PISN1) est transféré au réseau de radiocommunication mobile (PLMN),
e) et dans lequel l'information mémorisée concernant l'accessibilité de l'installation de communication sans fil est révisée, au cas où le terminal (KE1/KE2') est enregistré comme étant accessible à l'intérieur de l'installation de communication sans fil.

2. Procédé selon la revendication 1, pour le cas où l'installation de communication sans fil (PISN1), dans laquelle un appel arrive pour le terminal de communication (KE1/KE2'), puisse être exploitée en outre sur au moins une deuxième installation de communication sans fil (PISN2) supplémentaire en ce qui concerne ce terminal (KE1/KE2'), et pour le cas où le réseau de radiocommunication mobile (PLMN) de l'installation de rattachement de communication sans fil (PISN1) transmette un message relatif à l'accessibilité du terminal (KE1/KE2') par l'intermédiaire du réseau de radiocommunication mobile, si une information sur l'accessibilité actuelle du terminal (KE1/KE2') est présente dans le réseau de radiocommunication mobile,
**caractérisé en ce que**
l'appel est transféré de l'installation de rattachement de communication sans fil (PISN1) à l'installation supplémentaire de communication sans fil (PISN2), au cas où une information sur l'accessibilité actuelle du terminal (KE1/KE2') est présente dans le réseau de radiocommunication mobile par l'intermédiaire de l'installation supplémentaire de communication sans fil (PISN2).

3. Procédé selon la revendication 2, **caractérisé en ce que** l'installation de rattachement de communication sans fil transfert l'appel arrivant dans le réseau de radiocommunication mobile (PLMN), au cas où une information sur l'accessibilité actuelle du terminal dans le réseau de radiocommunication mobile est présente dans l'installation de rattachement de communication sans fil, et **en ce que** l'appel transféré dans le réseau de radiocommunication mobile (PLMN) est transféré par le réseau de radiocommunication mobile (PLMN) à l'installation supplémentaire de communication sans fil (PISN2) au cas où une information sur l'accessibilité actuelle du terminal (KE1/KE2') est présente dans le réseau de radiocommunication mobile par l'intermédiaire de l'installation supplémentaire de communication sans fil (PISN2).

4. Procédé selon l'une quelconque des revendications précédentes, **caractérisé en ce que** un appel arrivant pour un terminal de communication, en cas de renvoi d'appel réglé manuellement, est transmis vers une destination de renvoi réglée manuellement.

5. Installation de communication sans fil pour la réalisation d'un procédé pour communiquer un appel arrivant dans une première installation de communication sans fil (PISN1) à un terminal (KE1/KE2') qui peut être exploité aussi bien comme terminal sans fil de cette installation de communication sans fil (PISN1) que comme terminal de radiocommunication mobile d'un réseau de radiocommunication mobile (PLMN), sachant que, en cas d'accessibilité actuelle du terminal (KE1/KE2') dans le réseau de radiocommunication mobile, un message à ce sujet est transmis à l'installation de communication sans fil (PISN1) et qu'une information relative à l'accessibilité du terminal (KE1/KE2') par l'intermédiaire du réseau de radiocommunication mobile (PLMN) est mémorisée dans l'installation de communication sans fil (PISN1), sachant que, en cas d'accessibilité actuelle du terminal (KE1/KE2') par l'intermédiaire de l'installation de communication sans fil (PISN1), un message à ce sujet est transmis au réseau de radiocommunication mobile (PLMN) et qu'une information relative à l'installation de communication sans fil (PISN1), au moyen de laquelle le terminal (KE1/KE2') est accessible, est mémorisée dans le réseau de radiocommunication mobile (PLMN), sachant qu'il est vérifié si une information relative à l'accessibilité du terminal (KE1/KE2') par l'intermédiaire du réseau de radiocommunication mobile (PLMN) est mémorisée dans l'installation de communication sans fil, sachant que, au cas où cette vérification est bonne, l'appel arrivant dans l'installation de communication sans fil (PISN1) est transféré au réseau de radiocommunication mobile (PLMN) et que l'information mémorisée sur l'accessibilité de l'installation de communication sans fil est révisée au cas où le terminal (KE1/KE2') est enregistré comme étant accessible à l'intérieur de l'installation de communication sans fil, installation qui présente un dispositif de commande afin d'activer automatiquement un renvoi d'appel au terminal (KE1/KE2') dans le réseau de radiocommunication mobile (PLMN), en cas de réception d'une information relative à l'accessibilité du terminal (KE1/KE2') par l'intermédiaire du réseau de radiocommunication mobile (PLMN) pour ce terminal (KE1/KE2'), et afin de désactiver un tel renvoi d'appel lorsque le terminal de communication (KE1/KE2') est enregistré comme étant accessible à l'intérieur de l'installation de communication sans fil (PISN1).

6. Installation de communication sans fil pour la réalisation d'un procédé pour communiquer un appel arrivant dans une première installation de communication sans fil (PISN1) à un terminal (KE1/KE2') qui peut être exploité aussi bien comme terminal sans fil de cette installation de communication sans fil (PISN1) que comme terminal de radiocommunication mobile d'un réseau de radiocommunication mobile (PLMN), sachant que, en cas d'accessibilité actuelle du terminal (KE1/KE2') dans le réseau de radiocommunication mobile, un message à ce sujet est transféré à l'installation de communication sans fil (PISN1) et qu'une information relative à l'accessibilité du terminal (KE1/KE2') par l'intermédiaire du réseau de radiocommunication mobile (PLMN) est mémorisée dans l'installation de communication sans fil, sachant que, en cas d'accessibilité actuelle du terminal (KE1/KE2') par l'intermédiaire de l'installation de communication sans fil (PISN1), un message à ce sujet est transmis au réseau de radiocommunication mobile (PLMN) et qu'une information relative à l'installation de communication sans fil (PISN1), au moyen de laquelle le terminal (KE1/KE2') est accessible, est mémorisée dans le réseau de radiocommunication mobile (PLMN), sachant qu'il est vérifié si une information concernant l'accessibilité du terminal (KE1/KE2') par l'intermédiaire du réseau de radiocommunication mobile (PLMN) est mémorisée dans l'installation de communication sans fil, sachant que, pour le cas où cette vérification est bonne, l'appel arrivant dans l'installation de communication sans fil (PISN1) est transféré au réseau de radiocommunication mobile (PLMN) et que l'information mémorisée sur l'accessibilité de l'installation de communication sans fil est révisée au cas où le terminal (KE1/KE2') est enregistré comme étant accessible à l'intérieur de l'installation de communication sans fil, installation qui présente un dispositif de commande afin d'activer automatiquement un renvoi d'appel au terminal (KE1/KE2') dans le réseau de radiocommunication mobile (PLMN) pour ce terminal (KE1/KE2'), en cas de réception d'une information sur l'accessibilité du terminal (KE1/KE2') par l'intermédiaire du réseau de radiocommunication mobile (PLMN), et afin de désactiver un tel renvoi d'appel lorsque l'information relative à l'accessibilité du terminal (KE1/KE2') est révisée par l'intermédiaire du réseau de radiocommunication mobile (PLMN).
